# EUROPEAN PATENT APPLICATION

(11) **EP 2 570 250 A1**
(43) Date of publication of application: **20.03.2013**
(21) Application number: 11780399.9
(22) Date of filing: 13.05.2011
(51) Int. Cl.: B29C 45/26, B29C 45/78

(54) **INJECTION MOLDING DIE DEVICE FOR PRODUCING CABINET OF THIN DISPLAY DEVICE AND METHOD FOR PRODUCING CABINET OF THIN DISPLAY DEVICE**

(30) Priority: 14.05.2010 JP 2010111852
(71) Applicant: Sharp Kabushiki Kaisha, Osaka-shi, Osaka 545-8522 (JP)
(72) Inventor: NAKAMURA, Ikuo, Osaka-shi, Osaka 545-8522 (JP); FUCHIKAWA, Shunsaku, Osaka-shi, Osaka 545-8522 (JP)
(74) Representative: Müller - Hoffmann & Partner
(86) International application number: PCT/JP2011/002680
(87) International publication number: WO 2011/142140

(57) **Abstract**

Disclosed is an injection molding mold device for manufacturing a cabinet for a thin display device that allows the cabinet to be molded with no appearance defects being caused on the front face part, even in a case where bosses and ribs are disposed on the rear face part of the cabinet. The injection molding mold device 1 includes a stationary mold half 10 and a movable mold half 20. In a cavity 40, a face 42 formed in the movable mold half 20 corresponds to a cabinet front face 82 of a front cabinet 80. Further, in the stationary mold half 10, a hot runner 30 is disposed in a predetermined location, and an injection port 32 is disposed in a location corresponding to the lateral face end part of a cabinet lateral face 90.

## Description

### Technical Field

The present invention relates to an injection molding mold device for manufacturing a cabinet for thin display devices, and a method for manufacturing a cabinet for a thin display device, and particularly relates to an injection molding mold device for manufacturing a cabinet for a thin display device that has a stationary mold half and a movable mold half to inject a molten resin material for molding with a hot runner, and a method for manufacturing a cabinet for a thin display device using the injection molding mold device.

### Background Art

In recent years, for thin display devices, such as those for liquid crystal display televisions, the front face of a front cabinet as a resin molded item has increasingly been subjected to a high-gloss texturing treatment. As a result of this, flow marks, weld lines, and the like, which are caused in the manufacturing process, and which, in the past, would have been judged to be within the acceptable limit now tend to be judged unacceptable. In other words, the injection molding technology which is free from occurrence of a flow mark, a weld line, and the like, which are defects in appearance, has been demanded.

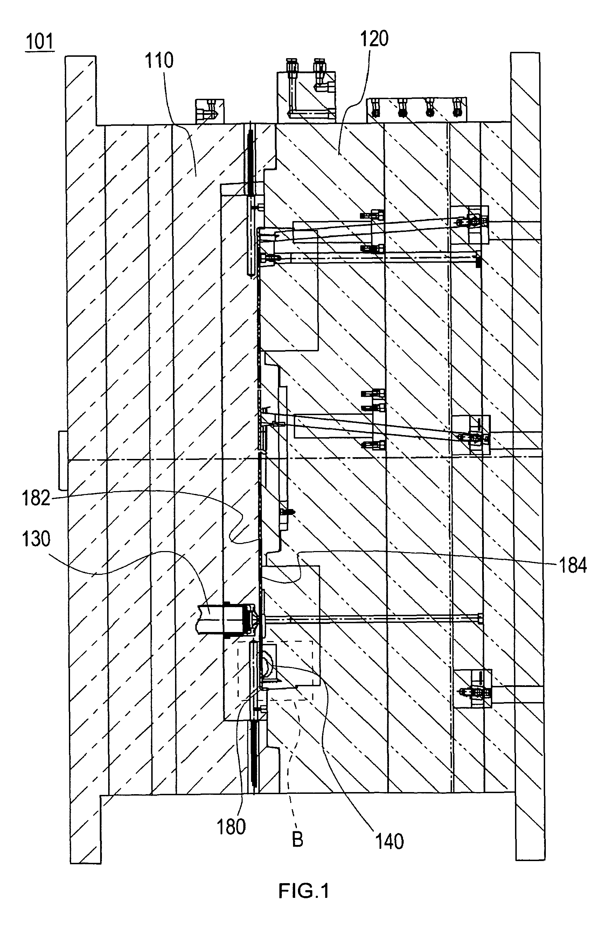

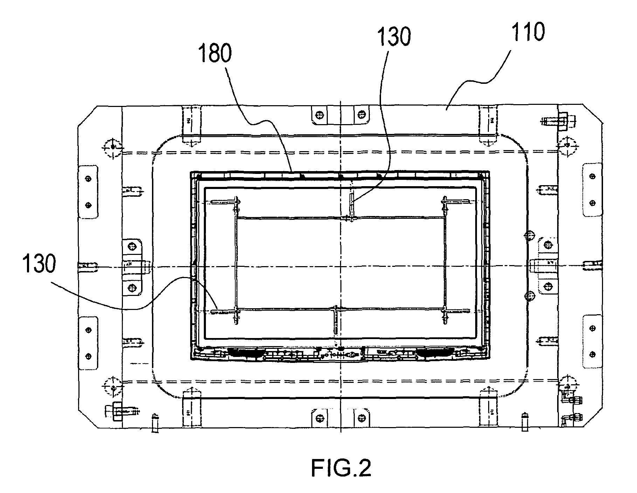

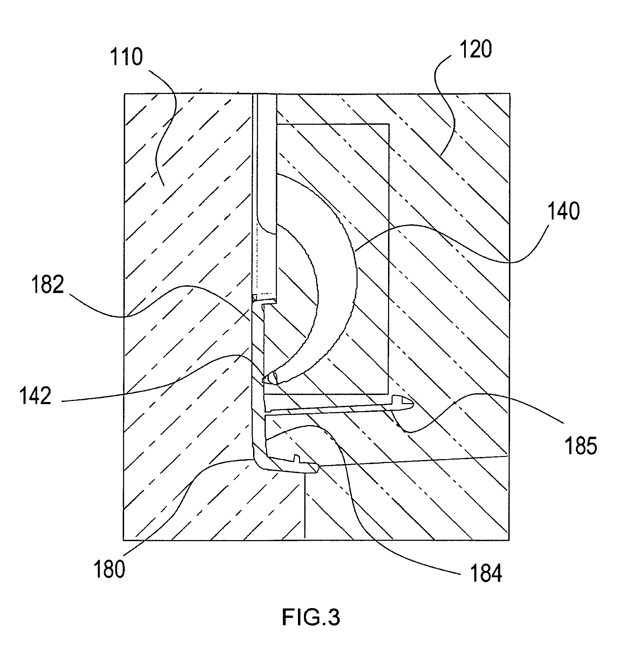

Figure 1 to Figure 3 give an example of an injection molding mold device 101 which has conventionally been used in general. As can be seen from these figures, in the prior art, the injection molding mold device 101 is configured such that a stationary mold half 110 provides an appearance face (front face) 182 of a resin molded item 180, which is a product, while a movable mold half 120 provides a rear face 184 of a resin molded item 180. Further, a hot runner 130 for injecting a molten thermoplastic resin material is disposed in the stationary mold half 110. And, as shown in Figure 3, which is an enlarged view of the area B in Figure 1, an injection molding pathway called a curled gate part 140 is formed from the stationary mold half 110 to the movable mold half 120 for injecting the resin material from a location corresponding to an injection part 142 in the rear face 184 of the resin molded item 180. By providing the curled gate part 140 in this way, a gate mark is prevented from being produced on the front face 182 of the resin molded item 180.

Some technologies for suppressing occurrence of a flow mark, a weld line, and the like, which provide defects in appearance have been disclosed. For example, there is provided a technology which performs injection molding by injecting a molten thermoplastic resin material supplied with a direct gate and a hot runner which are disposed in a stationary mold half member, into a cavity constituted by a molded item appearance face forming part and a molded item rear face forming part to thereby fill the cavity with the resin material (for example, patent document 1 to be referenced).

### Citation List

### Patent Literature

Patent document 1
Japanese Unexamined Patent Application Publication No. 2009-137087

### Disclosure of the Invention

### Problems to be Solved by the Invention

With the manufacturing method as illustrated in Figures 1 to 3, it has been inevitable that the material for the pathway (the sprue, runner, and the like) from the injection port of the hot runner 130 to the gate becomes wasted. This wastefulness has been demanded to be eliminated from the viewpoints of cost reduction and useful utilization of the material. In addition, in a case where the curled gate is disposed in a location corresponding to a flat face part of the product rear face as shown in Figure 3, there has been a problem that defects due to the flow of the resin, such as a flow mark, and the like, are caused on the product appearance face.

The technology as disclosed in patent document 1 is intended to provide an injection molding mold device and method with which it is easy to provide a flatness; the pressure distribution can be made uniform so as to prevent a warp from being caused; a molded item which is free from burrs can be obtained; and the occurrence of poor appearances, such as a weld mark, a flow mark, and the like, is reduced. However, the rear face of a cabinet for a thin display device has various mounting bosses, ribs, and the like, and therefore, it has been, as a matter of fact, difficult to directly dispose a direct gate in a location corresponding to a flat face part. If it is assumed that the direct gate could have been disposed, there has been another difficulty that, in a case where the gate has been directly disposed in a location corresponding to a flat face part, a defect, such as a flow mark, or the like, tends to be caused on the product front face, thereby another technology having been demanded.

The present invention has been made in view of the above problems, and it is an object of the present invention to provide a technology which can implement an injection molding mold device for manufacturing a cabinet for a thin display device which, even if bosses and ribs are disposed on the rear face part of the cabinet, allows the cabinet to be molded with no defects in appearance being caused on the front face part.

### Means for Solving the Problems

An aspect of the present invention relates to an injection molding mold device. This injection molding mold device is an injection molding mold device for manufacturing a cabinet for a thin display device, including a stationary mold half and a movable mold half, said stationary mold half and said movable mold half forming a cavity portion into which a molten resin material is injected with a hot runner, said stationary mold half providing a rear face of said cabinet, and said movable mold half providing a front face of said cabinet, said hot runner being disposed in said stationary mold half, and a resin material injection port of said hot runner being disposed in a face of said stationary mold half that corresponds to a location where there is formed an extending end part of a lateral face of said cabinet that extends from the rear face thereof.
Further, said face in which said injection port is disposed in said stationary mold half may be formed in the shape of a flat surface.
Further, said movable mold half may have a heating means for gloss treatment of the front face of said cabinet.
Another aspect of the present invention relates to a method for manufacturing a cabinet. This method for manufacturing a cabinet is a method for manufacturing a cabinet for a thin display device using an injection molding mold device, the injection molding mold device including a stationary mold half and a movable mold half, said stationary mold half and said movable mold half forming a cavity portion into which a molten resin material is injected with a hot runner; said stationary mold half providing a rear face of said cabinet and said movable mold half providing a front face of said cabinet in said cavity portion; said hot runner being disposed in said stationary mold half, a resin material injection port of said hot runner being disposed in a face of said stationary mold half that corresponds to a location where there is formed an extending end part of a lateral face of said cabinet that extends from the rear face thereof; and said resin material which is molten being injected into said cavity portion from said hot runner by the direct injection method.

### Advantages of the Invention

The present invention can provide an injection molding mold device for manufacturing a cabinet for a thin display device that allows the cabinet to be molded with no appearance defects being caused on the front face part, even in a case where bosses and ribs are disposed on the rear face part of the cabinet.

### Brief Description of the Drawings

Figure 1 is a drawing showing an injection molding mold device according to a conventional technology when viewed from the side;
Figure 2 is a top view showing a stationary mold half of the injection molding mold device according to the conventional technology, the relationship between a resin molded item and the hot runner being expressed;
Figure 3 is a drawing showing a curled gate part of the injection molding mold device according to the conventional technology;
Figure 4 is a drawing showing a resin molded item (front cabinet) according to an embodiment of the present invention;
Figure 5 is a drawing showing the injection molding mold device according to the embodiment of the present invention in a state in which the resin molded item (front cabinet) is formed, when viewed from the side;
Figure 6 is a drawing showing the injection molding mold device according to the embodiment of the present invention in a state in which the resin molded item has been separated from a stationary mold half and a movable mold half, when viewed from the side;
Figure 7 is an enlarged view showing the portion (the area A in Figure 5) of an injection port of the hot runner according to the present embodiment;
Figure 8 is a perspective view of the resin molded item (front cabinet) indicating a portion that corresponds to a portion (a gate portion) where the injection port of the hot runner according to the embodiment of the present invention is disposed;
Figure 9 is a drawing illustrating the step of taking out the resin molded item by the ejecting function including a hydraulic cylinder according to the present embodiment;
Figure 10 is a drawing showing an injection molding mold device having a heater according to a modification of the present embodiment, when viewed from the side; and
Figure 11 is a drawing showing the injection molding mold device having a heater according to the modification of the present embodiment, when viewed from the top.

### Best Mode for Carrying Out the Invention

Next, an embodiment for implementing the present invention (hereinafter, to be referred to as an "embodiment") will be explained with referring to the drawings. In the present embodiment, in molding a liquid crystal display television cabinet as a resin molded item, the product appearance part is produced in the movable half of the injection molding mold device, the molten thermoplastic resin material in the hot runner having a predetermined geometry being injected directly from a location corresponding to a resin injection part at the end of the cabinet lateral face part. Using such a manufacturing technology implements the molding technology which gives no restriction in providing of bosses, ribs, and the like, for the resin molded item, and with which a poor appearance is difficult to be caused. Further, the direct injection method is adopted, thereby the quantity of waste being reduced, resulting in effective utilization of the resin material.

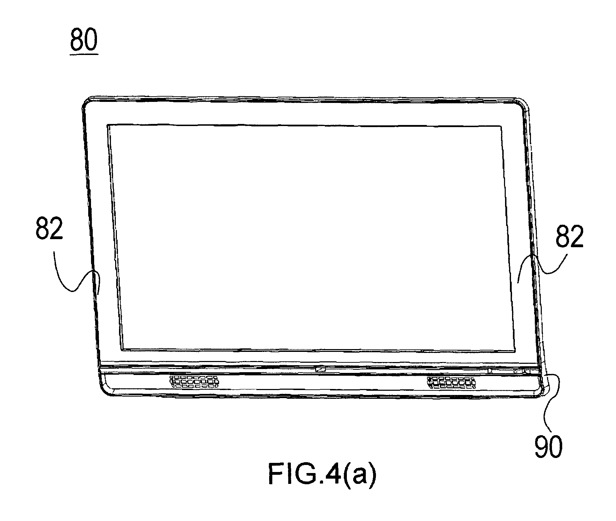

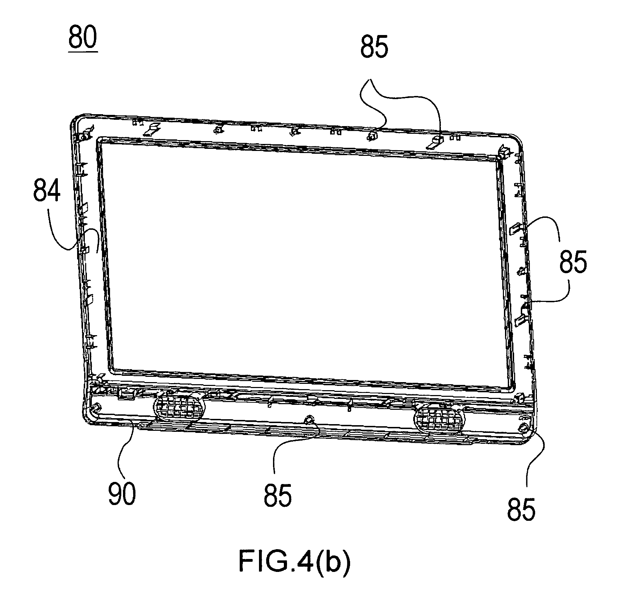

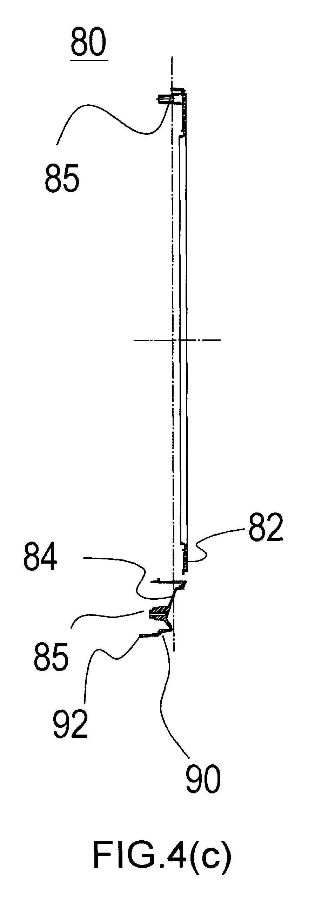

Figure 4 is a drawing showing a front cabinet 80, which is a resin molded item manufactured with an injection molding mold device 1 of the present embodiment. Figure 4 (a) is a figure when viewed from a cabinet front face 82; Figure 4 (b) is that when viewed from a cabinet rear face 84; and Figure 4(c) is a figure showing the sectional structure. The cabinet front face 82 of the front cabinet 80 is provided with a high-gloss treatment. On the other hand, on the cabinet rear face 84, a variety of ribs, bosses, and the like (hereinafter, to be collectively referred to as "ribs 85") are formed.

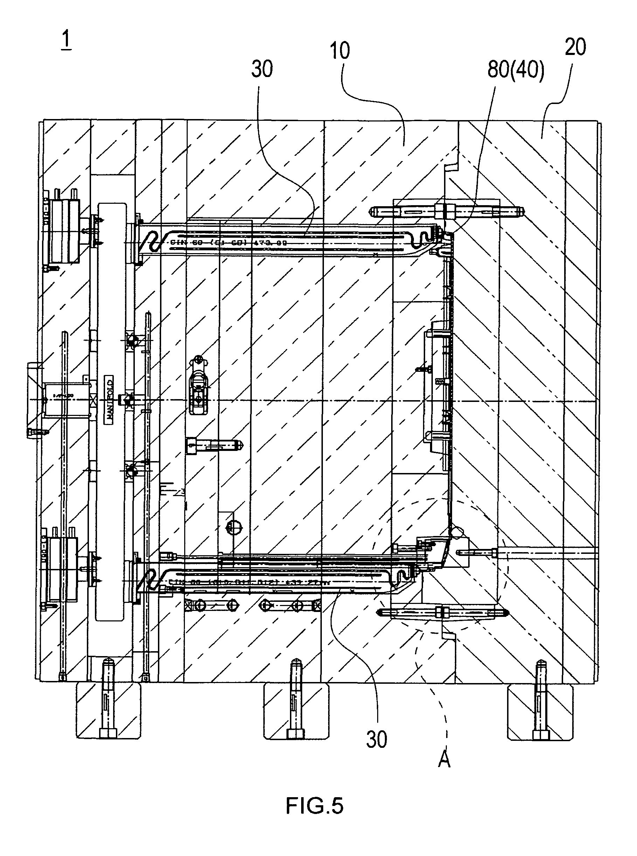

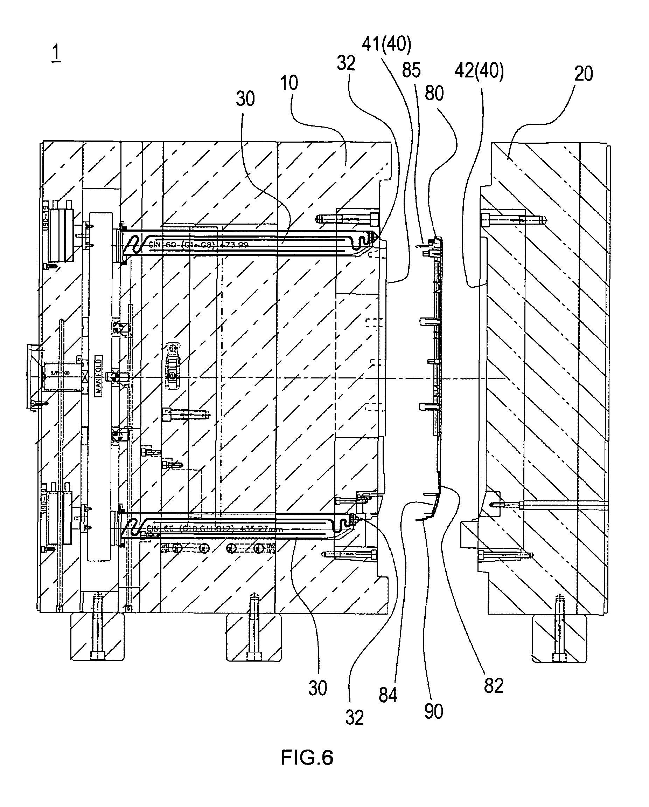

Figure 5 and Figure 6 show the injection molding mold device 1 for manufacturing the front cabinet 80. Here, the injection molding mold device 1 is shown with focus being given mainly on a stationary mold half 10 and a movable mold half 20. Figure 5 is a sectional drawing when viewed from the side, showing a state in which the front cabinet 80 is formed in a cavity 40 produced between a face 41 (Figure 6 to be referenced) of the stationary mold half 10 and a face 42 (Figure 6 to be referenced) of the movable mold half 20. Figure 6 is a drawing showing the front cabinet 80 formed being separated with the movable mold half 20 being separated from the stationary mold half 10.

As shown in the figures, the injection molding mold device 1 is configured to include the stationary mold half 10 shown at left and the movable mold half 20 shown at right. In the cavity 40, the face 42 which is formed in the movable mold half 20 provides a face corresponding to the cabinet front face 82 of the front cabinet 80. Further, this face 42 is mirror finished such that the cabinet front face 82 has a high gloss. In addition, the face 41 formed in the stationary mold half 10 provides a face corresponding to the cabinet rear face 84. In addition, as described above, in the front cabinet 80, various ribs 85 are formed from the cabinet rear face 84 toward the rear (leftward in the figure), and the face 41 of the stationary mold half 10 is provided with a predetermined geometry in correspondence to such a configuration of the ribs 85.

Further, in the stationary mold half 10, the hot runner 30 is disposed in a predetermined location. In Figure 5 and Figure 6, the hot runner 30 is disposed in upper and lower two places, however, the disposed number of hot runners 30 and the disposed location thereof are determined in consideration of the injectability and the fluidity and temperature distribution of the resin material in the mold, and the like.

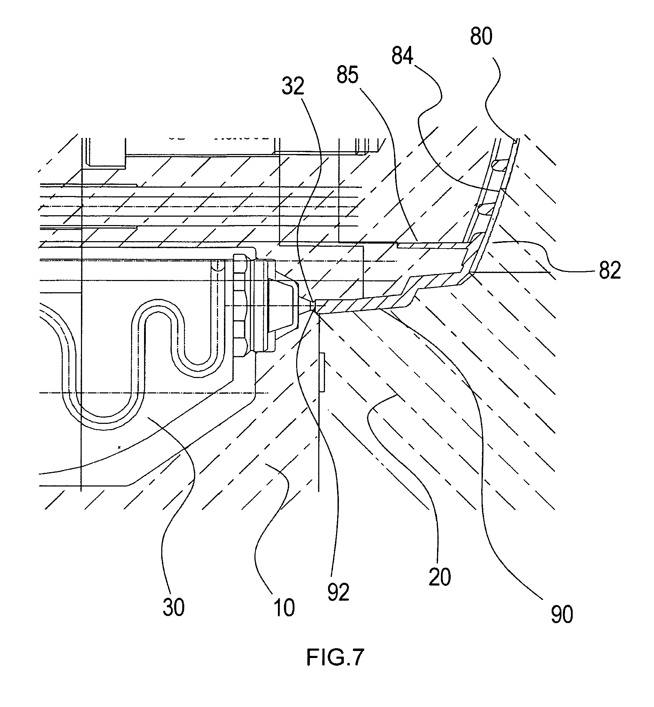

Figure 7 is an enlarged view of the area A in Figure 5, which gives focus on the injection port 32 of the hot runner 30. As shown in the figure, the hot runner 30 is disposed such that the injection port 32 is positioned in a location in the cavity 40 where a lateral face end part 92 of the cabinet lateral face 90 of the front cabinet 80 is to be formed. The size of the injection port 32 is, for example, 2 mm in diameter. And, generally, the lateral face end part 92 of the cabinet lateral face 90 provides the end part of the front cabinet 80 extending toward the rear side, and the ribs 85 disposed in the periphery are lower than the cabinet lateral face 90 and located inside of the lateral end part 92. Therefore, it can be positively avoided that the ribs 85 become an obstacle or restriction in determining the location of the injection port 32 of the hot runner 30. In other words, the hot runner 30 can be disposed in a location where the direct injection method can be applied.

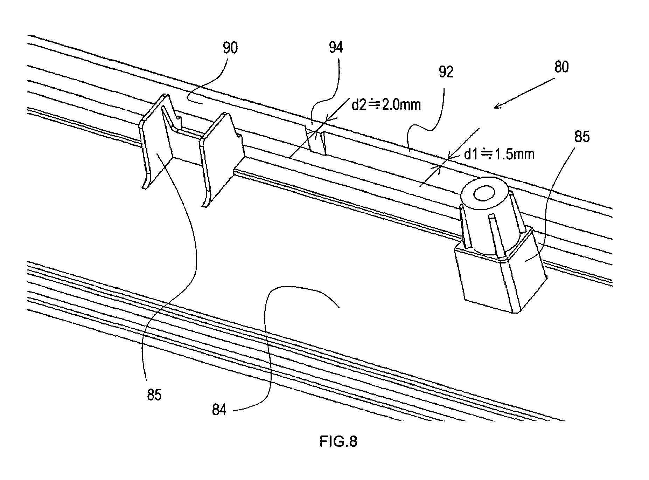

Figure 8 shows the cabinet rear face 84 of the front cabinet 80 which is manufactured with the injection molding mold device 1, with focus being given on the portion where the injection port 32 of the hot runner 30 is disposed. In the lateral face end part 92 of the cabinet lateral face 90, a resin injection part 94 is formed. In the face 41 of the stationary mold half 10 in the cavity 40, a flat face is formed in a location corresponding to the resin injection part 94, and in the flat face, the injection port 32 of the hot runner 30 is disposed for injecting the resin material into the cavity 40. In other words, the resin injection part 94 corresponds to the gate part.

The thickness d1 of the cabinet lateral face 90 is generally designed to be 1.5 mm or so. And, the thickness d2 of the resin injection part 94 is slightly larger than 2 mm, which is the diameter of the injection port 32 of the hot runner 30. From the viewpoint of minimizing the thickness, the thickness d2 of the resin injection part 94 may be substantially the same as the diameter of the injection port 32 of the hot runner 30, so long as the injection of the resin material is not influenced.

The manufacturing process of the front cabinet 80 with the above-described injection molding mold device 1 will be briefly explained here. In a state in which the front cabinet 80 has been taken out, the movable mold half 20 is moved to be disposed in a predetermined location such that, between the face 42 of the movable mold half 20 and the face 41 of the stationary mold half 10, the cavity 40 is formed as a space into which the resin material is injected. Then, from the hot runner 30 which is provided in the stationary mold half 10, the thermoplastic resin material is injected into the inside of the cavity 40. At this time, the injection port 32 of the hot runner 30 is in a location corresponding to the lateral face end part 92 of the cabinet lateral face 90 of the front cabinet 80, more specifically, a location corresponding to the resin injection part 94. And, after being cooled for a predetermined period of time, the movable mold half 20 is moved such that it is separated from the stationary mold half 10, and the front cabinet 80 which has been formed is taken out. Hereinafter, the above process is repeated as many times as required.

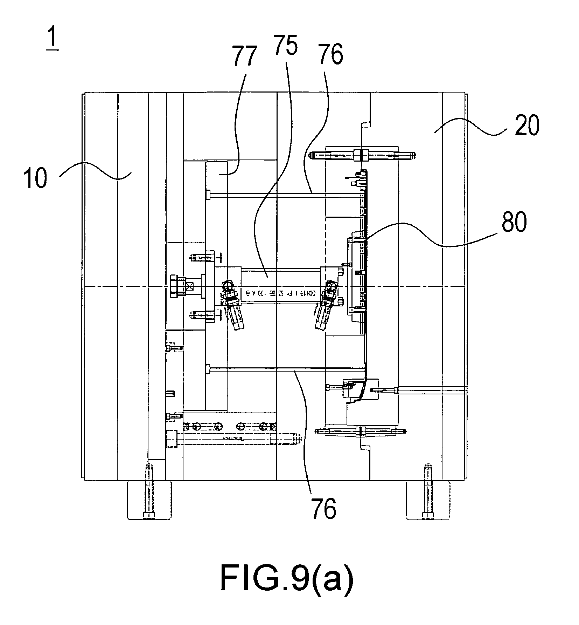

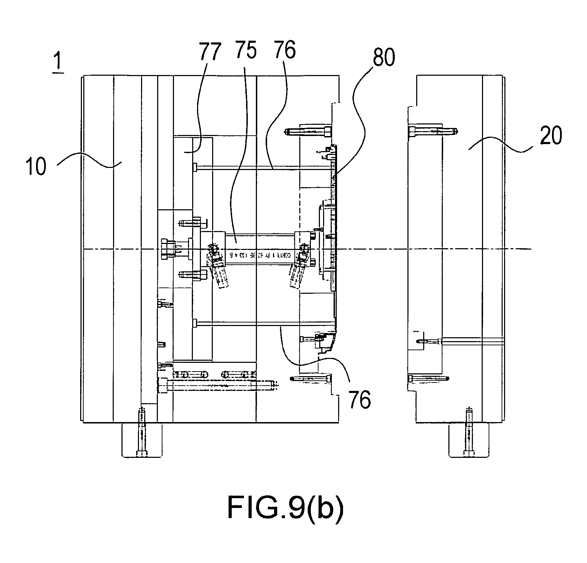

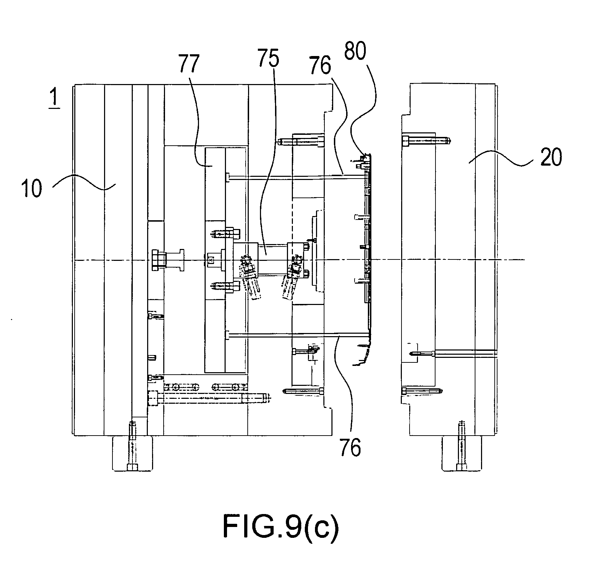

With reference to Figure 9(a) to Figure 9(c), the step of taking out the front cabinet 80 which has been molded will be explained with focus being given on the ejection mechanism using a hydraulic cylinder 75. When the molding of the front cabinet 80 is completed, the injection molding mold device 1 is controlled to be changed from the state in which the stationary mold half 10 and the movable mold half 20 are closed as shown in Figure 9(a) to the state in which the movable mold half 20 is opened as shown in Figure 9(b). Then, as shown in Figure 9(c), the hydraulic cylinder 75 operates an ejector plate 77 (moves it rightward in the figure), an ejector pin 76 mounted to the ejector plate 77 ejecting the front cabinet 80. This step allows the front cabinet 80 to be taken out.

As described above, according to the present embodiment, the hot runner 30 is disposed in the stationary mold half 10, and the injection port 32 of the hot runner 30 can be disposed in a location corresponding to the lateral face end part 92 of the cabinet lateral face 90 of the front cabinet 80, in other words, a location corresponding to the resin injection part 94. As a result of this, the occurrence of poor appearances, such as a weld mark, a flow mark, and the like, on the cabinet front face 82 can be greatly reduced. Further, the location where the possibility of occurrence of a weld mark, flow mark, or the like is high is the cabinet lateral face 90, which provides a location corresponding to the gate part, being an inconspicuous location, and therefore, if a weld mark, flow mark, or the like is produced, the criterion of a poor appearance would be loose, as compared to that for the cabinet front face 82. Furthermore, since the direct injection method is adopted which, unlike the conventional technology, does not use the curled gate part 140, wastes, i.e. , a sprue and a runner, will not be produced, whereby the present invention can greatly contribute to reduction in cost. For example, for a cabinet having a panel size of a 32-inch class, the quantity of use of the resin material can be reduced by approximately 120 g.

Hereinabove, the present invention has been explained on the basis of the embodiment. This embodiment is merely an exemplification, and any persons skilled in the art will understand that various modifications thereof can be created by combination of the respective components, and such modifications are also within the scope of the present invention.

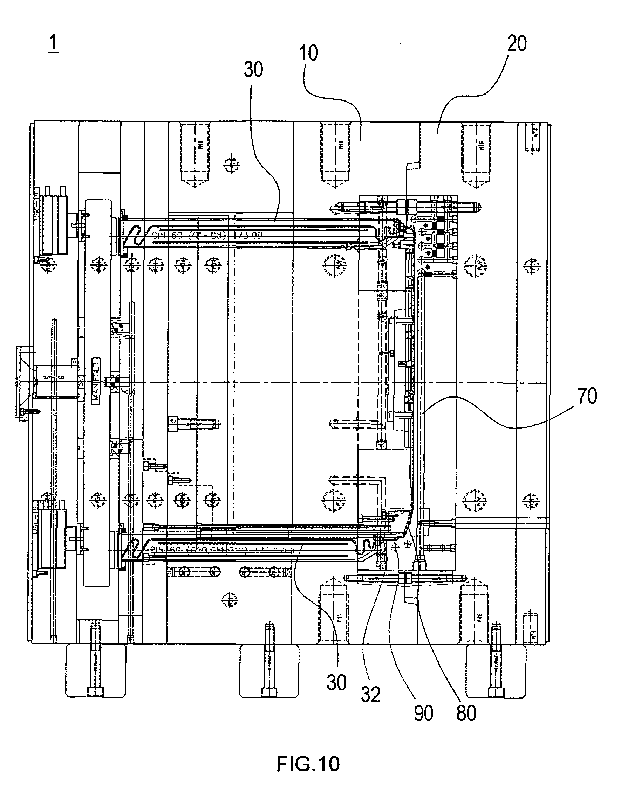

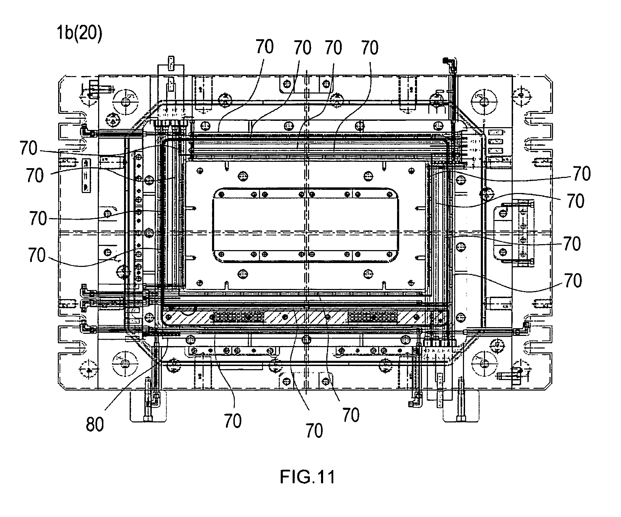

Figure 10 and Figure 11 show an injection molding mold device 1b according to a modification. Herein, the figures are shown with no hatchings being given. In order to improve the mold transferrability for increasing the glossiness of the cabinet front face 82, the injection molding mold device 1b is provided with a heater 70 in the movable mold half 20. The heater 70 is disposed in locations corresponding to the cabinet frames on the four sides of the front cabinet 80. Herein, as shown in Figure 11, four heaters 70 are disposed in the portions corresponding to the right, left, and upper frames of the front cabinet 80, and three heaters 70 in the portions corresponding to the lower frame of the same.

With conventional art as exemplified in Figure 1, since the hot runner 130 is disposed in the mold half with which the cabinet front face 182 is formed (the stationary mold half 110), it has been extremely difficult to secure the space for accommodating the heater 70. More specifically, in disposing the heater 70 for a higher gloss, it has been required to make a design which can prevent occurrence of poor appearances, such as a distortion, and the like, on the cabinet front face 82 due to the temperature distribution, with the positional relationship between the hot runner 130 and the heater being taken into account. Such design has been extremely difficult to be made, resulting in prolonged terms of design and trial manufacture, thereby, from the viewpoint of improvement of the design efficiency, a countermeasure has been demanded.

On the contrary, with the present modification, as shown in Figure 10 and Figure 11, no hot runners 30 are disposed in the movable mold half 20, in which the heaters 70 are disposed, thereby the design can be made extremely efficiently, and the degree of freedom for mold design is enhanced. Furthermore, the structure of the mold half for producing the cabinet front face 82 which requires a high-gloss surface is simplified, whereby the temperature distribution can be made more uniform, and thus the occurrence of poor appearances on the cabinet front face 82 can be greatly reduced. Instead of disposing the heater 70, a configuration which passes steam having a predetermined temperature for a definite period of time in the inside of the mold may be adopted.

### Description of Symbols

- 1, 1b:: injection molding mold device
- 10:: stationary mold half
- 20:: movable mold half
- 30:: hot runner
- 32:: injection port
- 40:: cavity
- 41, 42:: face
- 70:: heater
- 75:: hydraulic cylinder
- 76:: ejector pin
- 77:: ejector plate
- 80:: front cabinet
- 82:: cabinet front face
- 84:: cabinet rear face
- 90:: cabinet lateral face
- 92:: lateral face end part
- 94:: resin injection part

## Claims

1. An injection molding mold device for manufacturing a cabinet for a thin display device, comprising a stationary mold half and a movable mold half, said stationary mold half and said movable mold half forming a cavity portion into which a molten resin material is injected with a hot runner,
said stationary mold half providing a rear face of said cabinet, and said movable mold half providing a front face of said cabinet,
said hot runner being disposed in said stationary mold half, and
a resin material injection port of said hot runner being disposed in a face of said stationary mold half that corresponds to a location where there is formed an extending end part of a lateral face of said cabinet that extends from the rear face thereof.

2. The injection molding mold device of claim 1, wherein said face in which said injection port is disposed in said stationary mold half is formed in the shape of a flat surface.

3. The injection molding mold device of claim 1 or 2, wherein said movable mold half has a heating means for gloss treatment of the front face of said cabinet.

4. A method for manufacturing a cabinet for a thin display device using an injection molding mold device, the injection molding mold device comprising a stationary mold half and a movable mold half, said stationary mold half and said movable mold half forming a cavity portion into which a molten resin material is injected with a hot runner,
said stationary mold half providing a rear face of said cabinet and said movable mold half providing a front face of said cabinet in said cavity portion,
said hot runner being disposed in said stationary mold half, a resin material injection port of said hot runner being disposed in a face of said stationary mold half that corresponds to a location where there is formed an extending end part of a lateral face of said cabinet that extends from the rear face thereof, and
said resin material which is molten being injected into said cavity portion from said hot runner by the direct injection method.
